# EUROPÄISCHE PATENTSCHRIFT

(11) **EP 2 163 288 B1**
(45) Veröffentlichungstag und Bekanntmachung des Hinweises auf die Patenterteilung: **19.09.2012**
(21) Anmeldenummer: 09166190.0
(22) Anmeldetag: 23.07.2009
(51) Int. Cl.: B01D 35/153

(54) **Filtereinrichtung**
Filter device
Dispositif de filtre

(30) Priorität: 05.09.2008 DE 102008046008
(43) Veröffentlichungstag der Anmeldung: 17.03.2010
(73) Patentinhaber: Mahle International GmbH, 70376 Stuttgart (DE)
(72) Erfinder: Kimmerle, Andreas, 71332, Waiblingen (DE); Kunzi, Harald, 71364, Winnenden (DE)
(74) Vertreter: BRP Renaud & Partner

(56) Entgegenhaltungen:
- DE-U1-202007 006 385
- US-A1- 2004 094 464

## Beschreibung

Die vorliegende Erfindung betrifft eine Filtereinrichtung, insbesondere einen Öl- oder Kraftstofffilter in einem Kraftfahrzeug.

Bei modernen Filtereinrichtungen müssen in vorgegebenen Wartungsintervallen die darin eingesetzten Filterelemente, bspw. Ringfilterelemente, ausgetauscht und erneuert werden. Hierzu muss ein Gehäuse der Filtereinrichtung geöffnet und das darin angeordnete Filterelement entnommen bzw. ausgetauscht werden. Ein Öffnen des Filtergehäuses birgt dabei jedoch stets die Gefahr, dass innerhalb des Filtergehäuses vorhandener Kraftstoff bzw. Öl unkontrolliert nach außen gelangt und dadurch eine Umgebung verschmutzt. Dies muss unbedingt vermieden werden.

Dokument DE 20 2007 006 385 U1 offenbart einen Flüssigkeitsfilter mit einem Gehäuse, einem das Gehäuse verschließenden, abnehmbaren Deckel, einem Filtereinsatz, welcher möglichst tropfarm aus dem Filter entfernt werden kann.

Die Erfindung beschäftigt sich mit dem Problem, eine verbesserte Filtereinrichtung anzugeben, bei welcher beim Öffnen derselben ein Austritt einer innerhalb der Filtereinrichtung vorhandenen zu filternden Flüssigkeit zuverlässig vermieden wird.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bei einer Filtereinrichtung mit einem, einen Filtergehäusedeckel und einen Filtergehäuseboden aufweisenden Filtergehäuse ein Filterelement einerseits lösbar fest mit dem Filtergehäusedeckel und andererseits lösbar fest über einen Leerlauf mit dem Filtergehäuseboden zu verbinden, wobei die Verbindung des Filterelements mit dem Filtergehäuseboden leichtgängiger ausgebildet, dass heißt leichter zu öffnen und zu schließen ist als die Verbindung zwischen dem Filterelement und dem Filtergehäusedeckel, wodurch bei einem Öffnen des Filtergehäuses zuverlässig gewährleistet kann, dass zunächst die Verbindung zwischen dem Filterelement und dem Filtergehäuseboden geöffnet und damit der Leerlauf freigegeben wird, so dass die im Filtergehäuse noch vorhandene Flüssigkeit über den Leerlauf abfließen kann und nicht unkontrolliert in die Umgebung gelangt. Durch die unterschiedlich leicht gängigen Verbindungen des Filterelements einerseits zum Leerlauf und andererseits zum Filtergehäusedeckel hin, kann selbst ein Laie einen Wechsel des Filterelements problemlos durchführen, ohne dass er hierbei der Gefahr ausgesetzt ist, dass bei einem Öffnen der Filtereinrichtung Filterflüssigkeit unkontrolliert in die Umgebung gelangt und diese dadurch kontaminiert. Die Verbindung zwischen dem Filterelement und dem Filtergehäuseboden ist als Schraubverbindung ausgebildet.

Bei einer vorteilhaften Weiterbildung der erfindungsgemäßen Lösung, ist die Verbindung zwischen dem Filterelement und dem Filtergehäusedeckel als Schraubverbindung bzw. Schraubverschluss ausgebildet. Dies würde bedeuten, dass beide Verbindungen als unterschiedlich leichtgängige Schraubverschlüsse ausgestaltet sind, wobei sich der Schraubverschluss zwischen dem Filterelement und dem Filtergehäuseboden leichter lösen lässt als der Schraubverschluss zwischen dem Filterelement und dem Filtergehäusedeckel. Selbstverständlich ist hierbei auch denkbar, dass die Verbindung zwischen dem Filterelement und dem Filtergehäusedeckel als Bajonettverschluss ausgebildet ist, was automatisch ein zunächst vollständiges Lösen der Verbindung zwischen dem Filterelement und dem Filtergehäuseboden bedingt, bevor die Verbindung zwischen dem Filterelement und dem Filtergehäusedeckel gelöst werden kann. Darüber hinaus lassen sich derartige Schraubverbindungen bzw. Schraubverschlüsse äußerst exakt und kostengünstig herstellen, was sich positiv auf die Herstellungskosten der Filtereinrichtung auswirkt.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

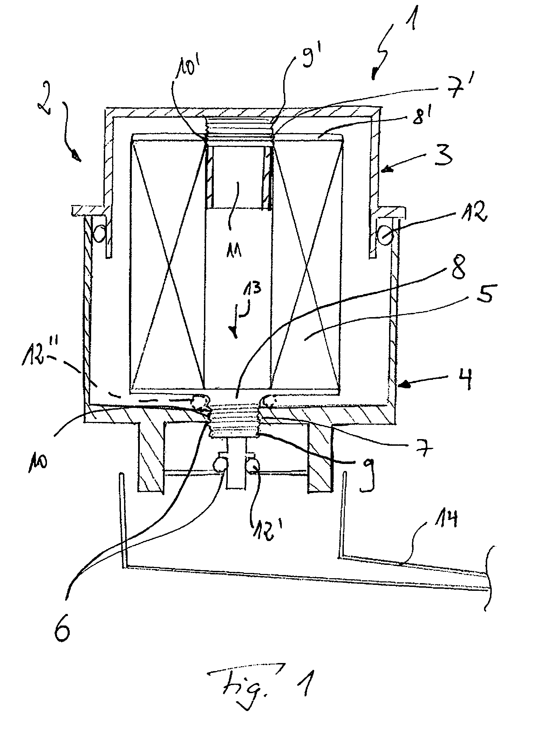

Die einzige Fig. 1 zeigt eine Schnittdarstellung einer möglichen Ausführungsform einer erfindungsgemäßen Filtereinrichtung.

Entsprechend der Fig. 1, weist eine erfindungsgemäße Filtereinrichtung 1, welche bspw. als Schmierstoff, insbesondere als Öl- oder Kraftstofffilter in einem Kraftfahrzeug, ausgebildet sein kann, ein Filtergehäuse 2 mit einem Filtergehäusedeckel 3 und einem damit verbindbaren Filtergehäuseboden 4 auf. Der Filtergehäuseboden 4 umfasst dabei im gezeigten Beispiel selbstverständlich auch noch Filtergehäusewände und kann allgemein auch als Filtergehäuseunterteil bezeichnet werden, während der Filtergehäusedeckel 3 als Filtergehäuseoberteil bezeichnet werden kann. Innerhalb des Filtergehäuses 2 ist dabei ein Filterelement 5, bspw. in der Gestalt eines Ringfilterelements, angeordnet und üblicherweise radial durchströmt. Erfindungsgemäß ist nun das Filterelement 5 einerseits lösbar fest mit dem Filtergehäusedeckel 3 und andererseits lösbar fest über einen Leerlauf 6 mit dem Filtergehäuseboden 4 verbunden. Eine Verbindung des Filterelements 5 mit dem Filtergehäusedeckel 3 ist dabei erfindungsgemäß leichtgängiger ausgebildet, als die Verbindung des Filterelements 5 mit dem Filtergehäuseboden 4, so dass bei einem Öffnen der Filtereinrichtung 1, dass heißt bei einem Abnehmen des Filtergehäusedeckels 3 vom Filtergehäuseboden 4, zuerst die Verbindung zwischen dem Filterelement 5 und dem Filterboden 4 gelöst und dadurch der Leerlauf 6 geöffnet wird. Hierdurch kann zuverlässig sichergestellt werden, dass bei einem Öffnen der Filtereinrichtung 1 zunächst der Leerlauf 6 geöffnet wird, so dass noch im Filtergehäuse 2 vorhandene Filterflüssigkeit zuverlässig abgelassen werden kann, ohne dass diese ungewollt in die Umgebung austritt und diese bspw. kontaminiert.

Die Verbindung zwischen dem Filterelement 5 einerseits und dem Filtergehäuseboden 4 bzw. dem Filtergehäusedeckel 3 andererseits kann dabei bspw. als Schraubverbindung bzw. als Schraubverschluss 7 bzw. 7' ausgebildet sein. Bei einem Aufschrauben des Filtergehäusedeckels 3 wird dabei zunächst die Schraubverbindung 7 zwischen dem Filterelement 5 und dem Filtergehäuseboden 4 gelöst und vorzugsweise vollständig geöffnet, bevor die Schraubverbindung 7' zwischen dem Filterelement 5 und dem Filtergehäusedeckel 3 überhaupt bewegt wird. Beispielsweise kann dabei der Durchmesser der Schraubverbindung 7 deutlich kleiner sein als derjenigen der Schraubverbindung 7', wodurch letztere allein aufgrund der Geometrie schwergängig ist, als die Schraubverbindung 7. Selbstverständlich kann dabei die Verbindung zwischen dem Filterelement 5 und dem Filtergehäusedeckel 3 auch als Bajonettverschluss ausgebildet sein.

Bei dem gemäß der Fig. 1 gezeigten Beispiel, ist an einer dem Filtergehäuseboden 4 zugewandten Endscheibe 8 des Filterelements 5 ein Außengewinde 9 vorgesehen, welches mit einem komplementär dazu ausgebildeten Innengewinde 10 im Leerlauf 6 des Filtergehäusebodens 4 zusammenwirkt. Das Außengewinde 9 ist dabei vorzugsweise einstückig mit der dem Filtergehäuseboden 4 zugewandten Endscheibe 8 des Filterelements 5 ausgebildet, bzw. bildet einen integralen Bestandteil der Endscheibe 8.

In gleicher oder umgekehrter Weise, kann an der Endscheibe 8', welche dem Gehäusedeckel 3 zugewandt ist, ein Innengewinde 10' vorgesehen sein, welches mit einem Außengewinde 9' eine an dem Gehäusedeckel 3 angeordneten Dorns 11 zusammenwirkt. Der Dorn 11 ragt dabei in einen Innenraum 12 des Filterelements 5 ein. Selbstverständlich kann dabei die Verbindung 7' zwischen dem Gehäusedeckel 3 einerseits und dem Filterelement 5 andererseits auch völlig anders gestaltet sein, bspw. mit einem an der Endscheibe 8' angeformten Außengewinde, welches in ein am Gehäusedeckel 3 angeformtes Innengewinde einschraubbar ist.

Zwischen dem Filtergehäusedeckel 3 und dem Filtergehäuseboden 4 ist gemäß der Darstellung in Fig. 1 ein Dichtelement 12, insbesondere eine O-Ringdichtung vorgesehen, so dass hier auf ein Filtergehäuseboden 4 mit dem Filtergehäusedeckel 3 verbindendes Gewinde prinzipiell verzichtet werden kann. Ein weiteres Dichtelement 12' kann bspw. bei Abdichtung des Leerlaufs 6 bei in die Filtereinrichtung 1 eingesetztem Filterelement 5 dienen. Mit unterbrochen gezeichneter Linie ist dabei ein alternativ zum Dichtelement 12' vorsehbares Dichtelement 12" gezeigt, welches in Einschraubrichtung 13 hinter dem Leerlauf 6 angeordnet ist und dadurch nicht Gefahr läuft, durch die Gewindegänge des Außengewindes 9 bzw. des Innengewindes 10 beim Einsetzen bzw. Einschrauben des Filterelements 5 in den Filtergehäuseboden 4 beschädigt zu werden.

Eine gemäß der Fig. 1 weiter dargestellte Ablaufrinne 14 ist selbstverständlich rein optional vorgesehen und dient lediglich einem Auffangen von aus dem Leerlauf 6 austretender Filterflüssigkeit bei Entfernen des Filterelements 5 aus der Filtereinrichtung 1.

Mit der erfindungsgemäßen Filtereinrichtung 1 kann somit zuverlässig ein unkontrolliertes und ungewolltes Austreten von in der Filtereinrichtung 1 vorhandener Filterflüssigkeit beim Öffnen derselben vermieden werden, was durch konstruktiv einfache Maßnahmen, wie bspw. unterschiedlich leichtgängige Gewinde bzw. Schraubverbindungen 7, 7' erreicht werden kann. Darüber hinaus ist eine derartige Filtereinrichtung 1 äußerst wartungs- und servicefreundlich.

## Patentansprüche

1. Filtereinrichtung (1), insbesondere ein Öl- oder Kraftstofffilter in einem Kraftfahrzeug, mit einem, einen Filtergehäusedeckel (3) und einen Filtergehäuseboden (4) aufweisenden Filtergehäuse (2), in welchem ein Filterelement (5), insbesondere ein Ringfilterelement angeordnet ist, wobei
- das Filterelement (5) einerseits lösbar fest mit dem Filtergehäusedeckel (3) und andererseits lösbar fest über einen Leerlauf (6) mit dem Filtergehäuseboden (4) verbunden ist,
- eine Verbindung (7) des Filterelements (5) mit dem Filtergehäuseboden (4) leichtgängiger ausgebildet ist als eine Verbindung (7') des Filterelementes (5) mit dem Filtergehäusedeckel (3), sodass bei einem Öffnen der Filtereinrichtung (1) zuerst die Verbindung (7') zwischen dem Filterelement (5) und dem Filtergehäuseboden (4) gelöst und dadurch der Leerlauf (6) geöffnet wird,
**dadurch gekennzeichnet, dass**
zumindest die Verbindung (7) zwischen dem Filterelement (5) und dem Filtergehäuseboden (4) als Schraubverbindung ausgebildet ist.

2. Filtereinrichtung nach Anspruch 1
**dadurch gekennzeichnet,**
**dass** die Verbindung (7') zwischen dem Filterelement (5) und dem Filtergehäusedeckel (3) als Schraubverbindung ausgebildet ist.

3. Filtereinrichtung nach Anspruch 1,
**dadurch gekennzeichnet,**
**dass** die Verbindung (7') zwischen dem Filterelement (5) und dem Filtergehäusedeckel (3) als Bajonettverschluss ausgebildet ist.

4. Filtereinrichtung nach einem der Ansprüche 1 bis 3,
**dadurch gekennzeichnet,**
**dass** an einer dem Filtergehäuseboden (4) zugewandten Endscheibe (8) des Filterelementes (5) ein Außengewinde (9) vorgesehen ist, welches mit einem komplementär dazu ausgebildeten Innengewinde (10) im Leerlauf (6) des Filtergehäusebodens (4) zusammenwirkt.

5. Filtereinrichtung nach Anspruch 4,
**dadurch gekennzeichnet,**
**dass** das Außengewinde (9) einstückig mit der dem Filtergehäuseboden (4) zugewandten Endscheibe (8) des Filterelementes (5) ausgebildet ist.

6. Filtereinrichtung nach einem der Ansprüche 1 bis 5,
**dadurch gekennzeichnet,**
**dass** zwischen dem Filtergehäusedeckel (3) und dem Filtergehäuseboden (4) ein Dichtelement (12), insbesondere eine O-Ringdichtung, vorgesehen ist.

7. Filtereinrichtung nach einem der Ansprüche 2 bis 6,
**dadurch gekennzeichnet,**
**dass** benachbart zur Verbindung (7) ein Dichtelement (12',12") vorgesehen ist, die den Leerlauf (6) bei montiertem Filterelement (5) abdichtet.

## Claims

1. A filter device (1), in particular an oil or fuel filter in a motor vehicle, comprising a filter housing (2) which has a filter housing cover (3) and a filter housing bottom (4) and in which a filter element (5), in particular a ring filter element, is arranged, wherein
- on one side, the filter element (5) is firmly connected in a detachable manner to the filter housing cover (3) and, on the other side, is firmly connected in a detachable manner via a drain (6) to the filter housing bottom (4),
- a connection (7) of the filter element (5) with the filter housing bottom (4) is configured to run smoother than a connection (7') of the filter element (5) with the filter housing cover (3) so that when opening the filter device (1), first the connection (7') between the filter element (5) and the filter housing bottom (4) is detached thereby opening the drain (6),
**characterized in that**
at least the connection (7) between the filter element (5) and the filter housing bottom (4) is configured as a screw connection.

2. The filter device according to claim 1,
**characterized in**
**that** the connection (7') between the filter element (5) and the filter housing cover (3) is configured as a screw connection.

3. The filter device according to claim 1,
**characterized in**
**that** the connection (7') between the filter element (5) and the filter housing cover (3) is configured as a bayonet joint.

4. The filter device according to any one of the claims 1 to 3,
**characterized in that**
on an end disk (8) of the filter element (5), said end disk facing the filter housing bottom (4), an external thread (9) is provided which interacts with an internal thread (10) formed complementary thereto in the drain (6) of the filter housing bottom (4).

5. The filter device according to claim 4,
**characterized in**
**that** the external thread (9) is integrally formed with the filter element's (5) end disk (8) facing the filter housing bottom (4).

6. The filter device according to any one of the claims 1 to 5,
**characterized in**
**that** a sealing element (12), in particular an O-ring seal, is provided between the filter housing cover (3) and the filter housing bottom (4).

7. The filter device according to any one of the claims 2 to 6,
**characterized in**
**that** adjacent to the connection (7'), a sealing element (12', 12") is provided which seals the drain (6) when the filter element (5) is assembled.

## Revendications

1. Dispositif de filtre (1), notamment filtre à huile ou à carburant dans un véhicule automobile, comportant un logement de filtre (2) présentant un couvercle de logement de filtre (3) et une base de logement de filtre (4), dans lequel un élément de filtre (5), notamment un élément de filtre annulaire est disposé, dans lequel
- l'élément de filtre (5) est d'une part relié solidement de manière amovible au couvercle de logement de filtre (3) et d'autre part relié solidement par l'intermédiaire d'un passage de ralenti (6) à la base de logement de filtre (4),
- une liaison (7) de l'élément de filtre (5) avec la base de logement de filtre (4) est réalisée de manière plus maniable qu'une liaison (7') de l'élément de filtre (5) avec le couvercle de logement de filtre (3), de telle sorte que lors d'une ouverture du dispositif de filtre (1) la liaison (7') entre l'élément de filtre (5) et la base de logement de filtre (4) soit d'abord annulée et le passage de ralenti (6) soit ainsi ouvert, **caractérisé en ce que**
au moins la liaison (7) entre l'élément de filtre (5) et la base de logement de filtre (4) est réalisée comme une liaison par vissage.

2. Dispositif de filtre selon la revendication 1,
**caractérisé en ce que**
la liaison (7') entre l'élément de filtre (5) et le couvercle de logement de filtre (3) est réalisée comme une liaison par vissage.

3. Dispositif de filtre selon la revendication 1,
**caractérisé en ce que**
la liaison (7') entre l'élément de filtre (5) et le couvercle de logement de filtre (3) est réalisée comme une fermeture à baïonnette.

4. Dispositif de filtre une des revendications 1 à 3,
**caractérisé en ce que**
sur une rondelle d'extrémité (8) tournée vers la base de logement de filtre (4) de l'élément de filtre (5), un filetage extérieur (9) est prévu, lequel coopère avec un filetage intérieur (10) réalisé complémentairement à celui-ci dans le passage de ralenti (6) de la base de logement de filtre (4).

5. Dispositif de filtre selon la revendication 4,
**caractérisé en ce que**
le filetage externe (9) est réalisé en un seul tenant avec la rondelle d'extrémité (8) de l'élément de filtre (5) tournée vers la base de logement de filtre (4).

6. Dispositif de filtre selon une des revendications 1 à 5,
**caractérisé en ce que**
entre le couvercle de logement de filtre (3) et la base de logement de filtre (4) un élément d'étanchéité (12), notamment un joint torique annulaire, est prévu.

7. Dispositif de filtre selon une des revendications 2 à 6,
**caractérisé en ce que**
a proximité de la liaison (7) est prévu un élément d'étanchéité (12',12"), qui étanchéifie le passage de ralenti (6) quand l'élément de filtre (5) est monté.
